# EUROPEAN PATENT APPLICATION

(11) **EP 4 350 378 A1**
(43) Date of publication of application: **10.04.2024**
(21) Application number: 22199428.8
(22) Date of filing: 03.10.2022
(51) Int. Cl.: G01S 5/02, G01S 5/14, G01S 13/74

(54) **METHOD FOR DETERMINING POSITION OF AN OBJECT IN A SPACE**

(71) Applicant: Paradox Engineering SA, 6883 Novazzano (CH)
(72) Inventor: CALABRO', Gaetano, 22014 Dongo (IT); PORETTI, Samuel, 6830 Chiasso (CH)
(74) Representative: M. Zardi & Co S.A.

(57) **Abstract**

It is disclosed a method for determining position of at least one object in a space. The method includes: -associating a tag to the object, so as the position of the tag corresponds to the position of the object; -associating an anchor to a drone, so as the position of the anchor corresponds to the position of the drone; -measuring an initial distance of the tag from the anchor, when the drone is at an initial position in the space; - measuring at least two additional distances of the tag from the anchor, when the drone is moved into at least two additional positions in the space; -detecting positions of the anchor in the space at said initial position and said at least two additional positions by means of a positioning system on board the drone when the initial distance and the two additional distances are measured; and -determining the position of the tag in the space by processing trilateration based on the initial distance, the at least two additional distances, and the positions of the drone, respectively, at the initial position and the at least two additional positions.

## Description

### Filed of application

The present invention relates to a method for determining position of an object in a space.

In particular, the present invention relates to a method of the type mentioned above wherein at least one radio signal is send to and received from a device attached to the object, and wherein the signal is processed to determine the position of the object in the space.

The present invention also relates to a system for determining position of an object in a space based on the method mentioned above.

### Prior art

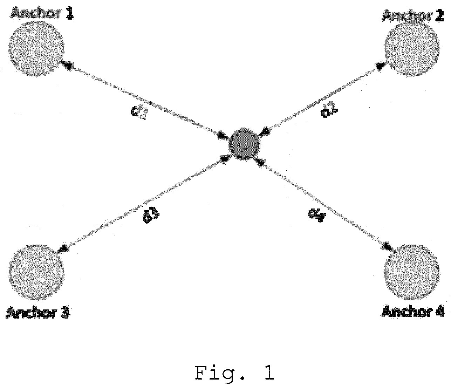

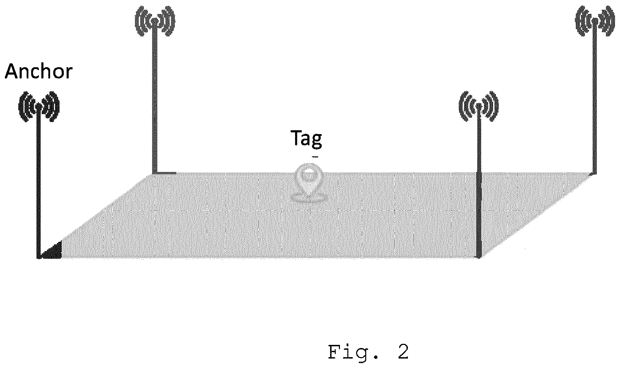

Methods are known to determine the position of an object in a space, indoor or outdoor. According to these methods a device, or tag, is attached to the object. The tag is adapted to receive and send radio signals from/to other devices, or anchors, which are placed at predetermined positions in the space. Each anchor is fixed into the respective known position and determine a distance from the object based for instance on the ToF (Time of flight), which is a measure of the time it takes for a wave to travel from the anchor to the object and, back, from object to anchor. For instance, with reference to figure 1, four anchors are places at top corners of a room, with the object and the tag placed at a certain position of the floor; figure 2 is a plant view, wherein distances between anchors 1-anchors 4 and the tag are indicated, respectively, with d1-d4. Ad said above, distances d1-d4 are measured, each, by the respective anchors 1-anchors 4. Once distances d1-d4 are known, position of the tag is determined by triangulation; in particular, by means of triangulation, the position of the tag is determined by forming triangles to the position of the tag from the known positions of the anchors in the space.

Although these methos are well known and appreciated for some uses, in particular, for indoor applications, they suffer of some limitations. For outdoors applications, for instance, it is something impossible to find a fixed position for the anchors because of the unavailability of structures or stable supports in the open space.

Moreover, radio technology used to implement the communication between tag and anchors is in general chosen to limit energy consumption and/or to support communication with passive tags. In these cases, distances between tags and anchors cannot exceed a certain threshold, which are however unsuitable for supporting most of the outdoor applications, where distances are significantly larger than in a room. Similar problems apply when the tag is movable since it may exit the range of coverage of the anchors.

Last but not least, it is impractical to mount the anchors at fixed positions. A preparatory phase is required to set the anchors in the space before the position of the tag may be determined, and this does not meet the need for detection in emergency situation.

The technical problem at the base of the present invention, therefore, is how to overcome the limits of the known methods for determining position of the object, especially how to provide a method immediately available in any space, indoor or outdoor.

### Summary of the invention

The idea at the base of the present invention includes reversing the logic which has been used so far in the prior art for detecting position of a tag (object) by means of fixed anchors.

In particular the idea at the base of the invention is to use a movable anchor for determining position of the tag by means of measurements subsequently made by the anchor at different positions.

For instance, a first position of the anchor is determined, and a first distance is measured between the anchor (at the first position) and the tag.

Then, the anchor is moved at a second position and a second distance is measured between the anchor (at the second position) and the tag. Further, the anchor is moved at a third position and a third distance is measured between the anchor (at the third position) and the tag.

First-to-third positions and first-to-third distances are used to determine position of the tag, in particular by processing triangulation (trilateration).

Advantageously, the plurality of anchor fixed in the space as used in the prior art are replaced by a single anchor movable in the space.

The prior art methods, requiring n fixed anchors at n predetermined positions, is replaced by moving the movable anchor at n positions, and determining the distances from the tag and the anchor at the n positions, reached at n different times by the anchor.

Advantageously, the method does not require a preparatory phase to set the anchor in the space.

Moreover, no stable (fixed) supports or structures are required in the space for the anchor.

The method is therefore immediately available, also outdoor and in emergency situation where there is no time to "prepare" the space.

Moreover, detection is not confined to a predetermined limited space, since the anchor is movable.

In case the tag is movable, loss of coverage is avoided, since the anchor is movable too, to keep or re-establish radio communication with the tag.

Based on the idea of solution mentioned above, the technical problem is solved by a method for determining position of an object in a space according to claim 1.

The method includes the following steps:
- associating a tag to the object;
- associating an anchor to a drone;
- detecting an initial position of the anchor in the space;
- measuring an initial distance of the tag from the anchor, when the drone (and the anchor) is at the initial position in the space;
- moving the drone and detecting at least two (a first and a second) additional positions of the anchor in the space; and
- measuring two additional distances of the tag from the anchor, when the drone is at the two (first and second) additional positions in the space;
- determining the position of the tag in the space by processing trilateration based on
   *the initial distance,
   *the two (first and second) additional distances and based on
   *the positions of the drone, respectively, at the initial position and at the two (first and second) additional positions.

As in the prior art, the position of the tag corresponds to the position of the object.

However, different from prior art, the position of the anchor corresponds to the position of the drone, which is movable and not fixed in the space. The positions of the anchor (i.e. the one of the drone) are detected by means of a positioning system on board the drone. The positioning system maybe a Global Positioning system (GPS). This is not limitative and, for instance, a Real-time kinematic positioning (RTK) may be adopted.

In an embodiment, the anchor is an electronic device separate (not embedded) in the drone, but firmly attached to the drone. An interface is provided between the anchor and the drone, for data communication, in particular for communicating to the drone the signals transmitted from the anchor to the tag and vice versa.

The distances are measured preferably by means of UWB (Ultra-Wide

### Band) signals.

Therefore, the initial distance is measured by means of UWB (Ultra-Wide Band) signals, meaning that a UWB (Ultra-Wide Band) signal is transmitted between the anchor and the tag, and then back to the anchor, to measure the ToF of the signal and deriving the distance anchor-tag from the ToF. The UWB (Ultra-Wide Band) signal is transmitted between the anchor and the tag, and back to the anchor, also to measure the additional distance(s) from ToF. The UWB signal are communicated to the drone by means of the interface drone/anchor.

In an embodiment, the position of the anchor (drone) is detected when the distance is measured. In other words, between the step of detecting the position of the anchor and the step of measuring the distance between the anchor and the tag, the drone (the anchor) does not move. After distance measurement and position detection, the drone (the anchor) may move.

The drone may move in more than three positions, where distances are measured. In general, the drone (the anchor) may move in a plurality of positions where it is stopped to measure distance and detect position of the drone (anchor).

As said above, the position of the anchor is variable, since the drone is movable. As to the tag, however, according to one embodiment, the position thereof is fixed in the space. In this case, also the object is stationary in the space.

In another embodiment, the position of the tag is also movable in the space. According to this embodiment, position of the drone and distance of the tag are compensated by means of an algorithm. In particular, the initial position of the anchor and initial distance anchor-tag are translated based on the movement of the object between time when initial distance is measured and time when the first additional distance is measured.

By means of compensation, initial distance of the anchor taken with reference to a first coordinate system, the one based on an initial position of the tag, is mapped into a second coordinate system, which is based on a changed position of the tag. The second coordinate system, i.e. the changed position of the tag, is estimated preferably by means of an accelerometer and an odometer onboard the object.

In case the object moves also between time when the first additional distance is measured and time when the second additional distance is measured, the algorithm further compensate by translating the first additional distance from the second coordinate system to a third coordinate system, which is based on a further changed position of the tag. Based on the compensation algorithm, the initial distance and the first additional distance as actually measured have same values as they were taken in the third coordinate system. Triangulation is therefore made in the third coordinate system (meaning in a system where the object position has to be determined).

According to another embodiment, a flight of the drone in the space is predetermined.

A predetermined flight is preferrable for scanning the space, especially when there is no indication in advance on possible presence of tag(s) in the space.

The method of the invention is also suitable to detect position of more than one tag in the space.

In an embodiment, a number n of tag for which position has to be determined in the space is preferably set in advance. In other embodiment, the number of tags is not set in advance, because unknown.

Just to cite an example, n tags may be attached to bodies of n persons which are overwhelmed by a snow avalanche, not delimited by precise geographical boundaries. Position of all the tags have to be determined to save people. In this case, the drone may scan the space within a broad geographical range to detect a presence signal from all the n tags. Scan is made before starting positions detection of the tags (by trilateration).

Scan ends when all the n tags have answered to a presence signal request sent by the anchor. At each position where an answer from a tag is received, such position of the drone is stored in a memory; all the positions stored determine a flight path to be followed by the drone for subsequent positions detection of the n tags. I.e., only after scan (presence detection), position detection starts. Position detection is made at each position among the positions previously scanned.

According to different embodiments, the scan for searching presence signal(s) may be skipped and detection of the tag(s) may immediately start. This is an option for instance when the space is entirely covered by the radio coverage of the anchor, in particular when the space is limited by precise boundaries, for instance when the point in the room farthest from the drone is under radio coverage of the anchor.

As to the number of measurements and detections, the following requirements preferably applies.

At least three positions are considered for each tag, the positions above referred as "initial position" and "two (first-second) additional positions".

At least three distances between anchor and tag are considered, for each tag.

However, the same position of the drone may be used to measure (different) distances from more than one tag. Accordingly, the number of time position detection is carried out may be (also significantly) less than the number of time distance measurement is carried out. Considered for instance n=10 tags that are under coverage of the anchor at a same initial position, it is sufficient for the drone to move two times to reach two additional positions where the n=10 tags are still under coverage to make all the distance measurements, i.e. 10 measurements are made in the initial positions and 10 measurements in the first additional position and 10 measurements in the second additional position.

In one embodiment, the initial distance and the additional distances are measures sequentially. For instance, the initial distance is measured for a first tag; then, the drone is moved to measure the initial distance for a second tag and then it is moved to measure the initial distance for a third tag and all the remaining (4-n) tags, sequentially, for each of a plurality of n tags associated to corresponding objects.

After measuring the initial distance for all the n tags, the drone is moved to measure, still sequentially, the additional distance(s): a first additional distance is measured for the first tag; then, the drone is moved to measure the first additional distance for the second tag and then is moved to measure the first additional distance for the third tag and for all the remaining (4-n) tags, sequentially.

After measuring the first additional distance for all the n tags, a second additional distance is measured for the first tag; then, the drone is moved to measure the second additional distance for the second tag and then is moved to measure the second additional distance for the third and for all the (4-n) remaining tags, sequentially, for each of the plurality of n tags associated to corresponding objects.

A path of the drone for measuring the first distance(s) is ended after all the first distance(s) is measured for all the n tags of the plurality of the tags.

The path of the drone for measuring the first distance(s) may correspond to the path covered for scanning the presence signal, if such step of scanning is made.

A path of the drone for measuring the second distance(s) is ended after the second distance(s) is measured for all tags of the plurality of the tags.

The path of the drone for measuring the second distance(s) may correspond to the path covered for measuring the first distance(s).

However, in other embodiment which are also disclosed in the detailed description, positions detections is not made sequentially as disclosed above and the drone scan the space to measure among from tags and to determine a flight path based on such distances. Once the flight path is established, the drone starts processing a circular track of coordinates for each tag; the circular track of coordinates includes taking positions of the drone and measuring distances from the tag for at least three time, moving circularly around the tag. Once the circular track of coordinates for a first tag in the flight path is determined, the circular track of coordinates for a second tag is processed (and so on until the flight path is ended). Circularity of movement is not limitative, meaning that, once the flight path is established, the drone may start processing a track of coordinates for each tag following another trajectory, always with the scope of taking positions of the drone and measuring distances from the tag for at least three time.

Moreover, circularity of movement is not limitative since the trajectory of the drone may also depend on the location of the tags with respect to the drone. In particular, the drone may be, at a certain time, at certain location for tracking a first tag, where also a secondo tag is covered by the radio coverage of the drone. In this case, both the first and second tags may receive the signal from the drone at said certain location, meaning that when the drone has completed processing the track for the first tag, it has to track the second tag for two and not three times, and therefore meaning that the track for the second tag may be simplified.

In one embodiment, the flight path is started from a geographical coordinate which is received from the drone as a command to determine position of object(s). The command may include a maximum distance from the geographical coordinate within which carrying out the position detection. In the example given above, if the snow avalanche has a certain geographical coverage, the drone may be controlled to start the flight path from the geographical coordinate corresponding to a middle point of the avalanche, and the maximum distance from the geographical coordinate may be a distance from the middle point to east, west, north and south borders of the avalanche. The middle point and the border may be determined remotely, by a geographical monitoring system.

Features of this embodiment may be combined with other embodiments; for instance, the flight path may start form the geographical coordinated as explained above and, starting from such coordinate, the drone scan the area to detect present of tag and measure distances among the tags, process the flight path as a sequence of tags to be measured among those scanned, and subsequently process the circular track of coordinates as already explained above. The flight path, for example, is a sequence of identifier of tags to be measure, i.e. id4, id2, id3, id1 in case idi is the identifier of tagi and tags are measured in the sequence tag4, tag2, tag3, tag1. This flight path may be convenient, for instance, because tag 2 is close to tag 4, tag 3 is close to tag 1, but tag 3 is far from tag 2.

In one embodiment, a remote controlled is provided to drive the drone. Wireless communications between the remote controller and the drone is provided. The remote controller may receive the positions of the drone at the initial position and at the at least two additional positions from the drone and may further receive the initial distance and the at least two additional distances from the anchor. Based on these data (positions, distances), the step of determining the position by triangulation (trilateration) is made in the remote controller. This is advantageous in case of danger on the field, since the calculation is made remotely and may be made also in case of damages to the drone on the field. Furthermore, further data, for instance one among a telemetry or a video may be taken from the drone and transmitted to the remote control.

According to an embodiment, the anchor embeds electronic means adapted to interface communication with electronic means on board the drone. For instance, a Linux Embedded module is stored on the anchor. By means of the electronic means, trilateration is made locally intro the anchor and the position of the tags (coordinates) are processed locally at the drone, and subsequently transmitted to the ground. In addition RAW data may be transmitted, to be used on ground as log.

The technical problem as specified above is also solved by a system for determining position of an object in a space according to the present invention.

The system includes:
- a tag associated to the object;
- an anchor associated to a drone;
- the drone including a positioning system.

The drone is configured to move at an initial position in the space, for measuring an initial distance of the tag from the anchor; and to move into at least two additional positions in the space, for measuring at least two additional distances of the tag from the anchor.

A processor of the system is configured for determining the position of the tag in the space by processing trilateration based on the initial distance and the at least two additional distances.

The processor is further configured to process positions of the anchor in the space at the initial position and at least two additional positions for processing trilateration.

According to different embodiments, the processor is included in a base station or in the drone.

Preferably, the anchor includes at least two UWB dual polarized antennas, suitable to receive signals from the tag(s) also in case of misalignment therefrom. Each one of the UWB dual polarized antenna includes an array of at least two antennas adapted to detect phase variations of the signal from the tag(s) and to detect, by means of said phase variations, the distance of the tag from the anchor and an angle of the tag from the anchor.

The tag and/or the anchor includes preferably interfaces towards a mobile phone.

### Brief description of the annexed drawings

Fig. 1 is a schematic and top view of a method for detecting position of an object in a space, according to the prior art.
Fig. 2 is a schematic and perspective view of the method for detecting position of the object in the space of fig. 1.
Fig. 3 is a schematic and top view of a method for detecting position of an object in a space, according to the present invention.
Fig. 4 is a schematic and perspective view of the method for detecting position of the object in the space, according to the present invention.
Fig. 5 is a block diagram of a tag of a system for detecting position of an object in a space, according to the present invention.
Fig. 6 is a block diagram of an anchor of the system for detecting position of an object in a space, according to the present invention.
Fig. 7 is a block diagram of a drone of the system for detecting position of an object in a space, according to the present invention.
Fig. 8 is a block diagram of a ground application of a system for detecting position of an object in a space, according to the present invention.
Fig. 9 is a block diagram of steps of the method for detecting position of an object in a space, according to the present invention.
Fig. 10 is a block diagram of a remote controller of the system for detecting position of an object in a space, according to the present invention.
Fig. 11 is a block diagram of an application of the system for detecting position of an object in a space, according to the present invention.

### Detailed description of the invention

The present invention includes a change of perspective with respect to the prior art method and systems used for detecting position of an object in a space, as a replacement of three or more anchors static in the space with a single mobile anchor movable in the space is envisaged. This change allows the management of dynamic scenarios, ease of deploying and use by eliminating the need of a known position fixed anchors.

For instance, the method and system for detecting position as disclosed is used to monitor rescue and emergency interventions, such as to support a fire brigade missions to monitor critical interventions and plan operations in safety. A real-time knowledge of the exact position of people or critical assets within an intervention area is obtained, and therefore an accurate view of the situation in real time. Locating people or assets in confined areas as well as in very large environments such as extinguishing fires on large hills, civil protection actions in the event of large-scale catastrophic natural events, police actions on big crowds due to demonstrations etc... may be managed.

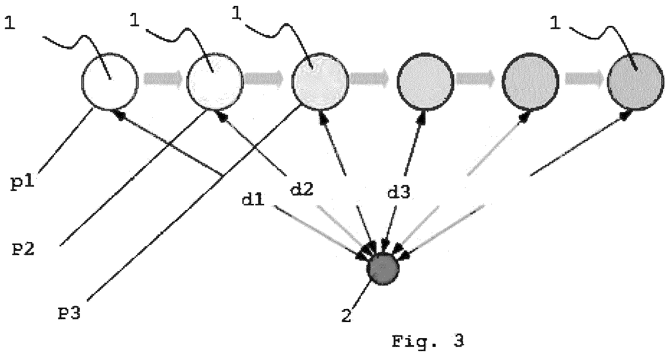

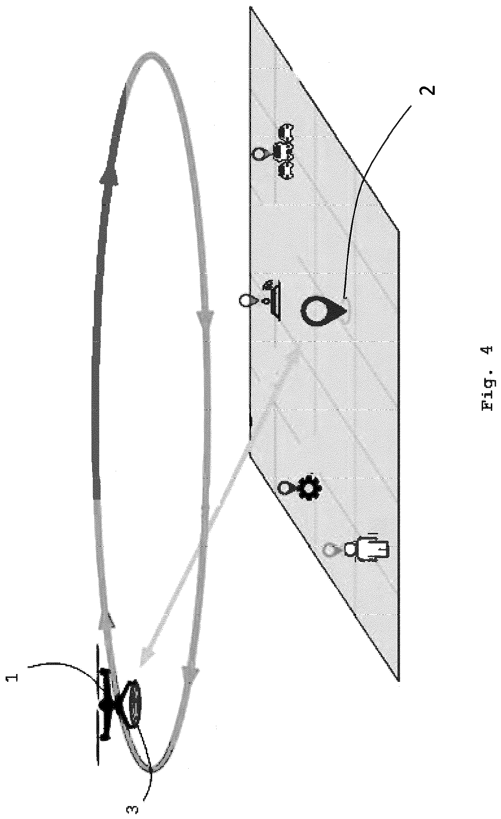

With reference to figures 3 and 4, is schematically represented a drone 1, an anchor 3 attached to the drone and a tag 2 attached to an object for implementing the method and system, in particular in critical scenarios as those mentioned above.

According to the method the anchor 3 measures an initial distance d1 of the tag 2 from the anchor 3, when the drone 1 is at an initial position p1 in the space.

The initial distance d1 is measured sending UWB (Ultra-Wide Band) signals between the anchor 3 and the tag 1.

The drone 1 moves to move the anchor 3 at a different position p2 for measuring an additional distance d2 of the tag 2 from the anchor 3.

The drone 1 moves again to move the anchor 3 at a different position p3 for measuring an additional distance d3 of the tag 2 from the anchor 3.

The additional distances d2, d3 are measured by sending UWB (Ultra-Wide Band) signals between the anchor 3 and the tag 2.

Positions of the anchor 3 in the space at the initial position p1 and at the additional positions p2, p3 is also detected by means of a positioning system on board the drone 1. The drone 1, indeed, ha always the same position of the anchor 3.

In one embodiment, the anchor 3 is embedded in the drone 1. In another embodiment, the anchor 3 is a component separate from the drone 1.

The position of the tag 2 in the space is determined by processing trilateration based on the initial distance, the at least two additional distances, the positions of the drone, respectively, at the initial position and the at least two additional positions.

High accuracy of position detection is obtained as follows. Accurate localization is a feature of wireless sensor network (WSN) application which require location awareness. In this field, Ultra-wide Band (UWB) radio technology based on the IEEE 802.15.4z is advantageous since allows to carry out localization. In particular, high accuracy of UWB compared to other wireless tracking solutions allows for a wider range of collaborative application scenarios with (multi) drone or (multi) robots, where an accuracy of the order of tens of centimeters is required.

Moreover, radio technology based on the IEEE 802.15.4a and 802.15.4z standards can enable the very accurate measure of the Time of Flight of the radio signal, leading to centimeter accuracy distance/location measurement. In addition to this unique capability, UWB offers data communication capability (up to 6.8 Mbit/s) while using extremely little energy. To summarize, UWB signals can penetrate indoor walls or object and give more accurate results that other localization technologies. UWB positioning use time methodology (time of flight ToF) instead of the measurement of signal strength (RSSI) unlike other systems. Moreover, UWB offers low power consumption and robustness on multipath effects.

For the reasons stated above, according to the present disclosure, UWB signals are transmitted from an anchor to a tag, to detecting position of the tag. Reference is made in the present application in particular to time-of-flight method for measuring distance. However, at least three localizations method may be implemented with UWB:
- ToF: measure of the time it takes for a radio wave to travel from anchor to tag. The measured time-of-flight can be time-of-flight or round-trip time-of-flight. If unidirectional time-of-flight measurement is implemented, clocks of the measuring devices and clock of the measurement devices have to be closely synchronized to achieve high accuracy.
- Angle of Arrival (AoA): by means of two or more antennas in the receiving phase, the anchor can calculate the angle of arrival of the received signal and therefore the direction of the transmitting device (tag). It's possible to measure with an accuracy of +/- 3 degree.

Therefore, also if reference is made in the present application in particular to time-of-flight method for measuring distance, other possible method may be implemented.

In an embodiment, the system of the invention includes the following components:
1. UWB Tag for location and data transmission
2. UWB Anchor (mounted on a Drone)
3. Drone
4. SW Application (data collect and position calculation)
5. Remote controller
6. Mobile Phone (not mandatory)

Each component is described here below with reference to a drawing.

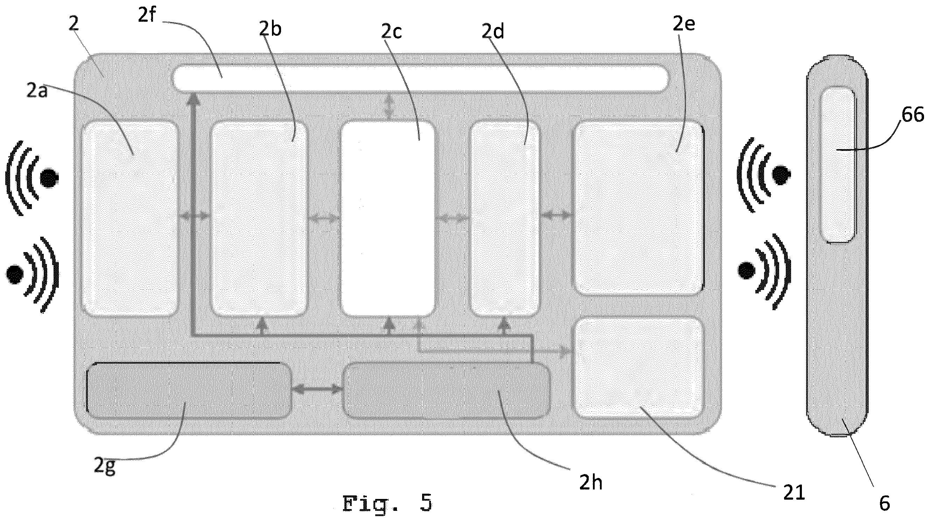

### 1. The tag (figure 5)

As depicted in the functional block diagram of figure 5, the Tag device implements/includes the following functions/components.
- UWB and BT antennas: UWB and Bluetooth antennas are provided to optimize required space and performances avoiding influence of adjacent objects and various use scenarios (in pockets, on metals, etc.).
- UWB transceiver: a transceiver configured to minimize size and consumption and at the meantime maximize the wireless link distance.
- Microcontroller: configured to manage the entire system functionalities of the tag, maintaining a low power consumption profile.
- BT module and data interface: configured to provide wireless and wired connectivity to devices or sensors (and in general to the object whereto the tag is attached), and to allow data transfer by means of UWB data connection.
- Power: power supply is provided by an internal battery managed (charge and discharge) by a power management circuit.

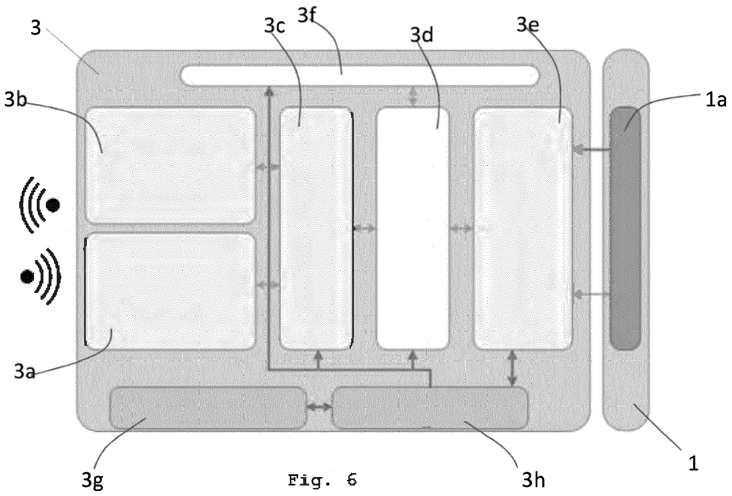

### 2. UWB Anchor (figure 6)

The anchor is mounted on the drone and comprises the following functional blocks/components:
- UWB Antennas: a dual polarized UWB antennas to obtain an optimal signal level even with misaligned polarization TAGs. In order to allow, in addition to the estimate of the distance through the ToA, also an estimate of the angle of arrival, the antenna with double polarization includes an array composed of two or more antennas aiming to discriminate the phase variations of the signal transmitted by the tag. It allows to obtain the information of distance and angle with respect to the drone (by means of an algorithm) with high accuracy and speed of localization.
- UWB Transceiver: configured to manage angle and distance estimation and data transfer.
- Microcontroller: UWB data are integrated with drone data (position, GPS/RTK) and preferably transmitted to the remote control through a dedicated Radiolink channel for further processing (i.e. for determining the position of the tag). The Microcontroller provides management functions to pre-elaborate data, managing the communication with UWB module and the interface with drone.
- Power management: Anchor is powered through a dedicated power supply block (battery and power management).
- Anchor is also compatible with mobile phones with UWB interface available. Mobile phone embedding UWB technology may be used as a tag.

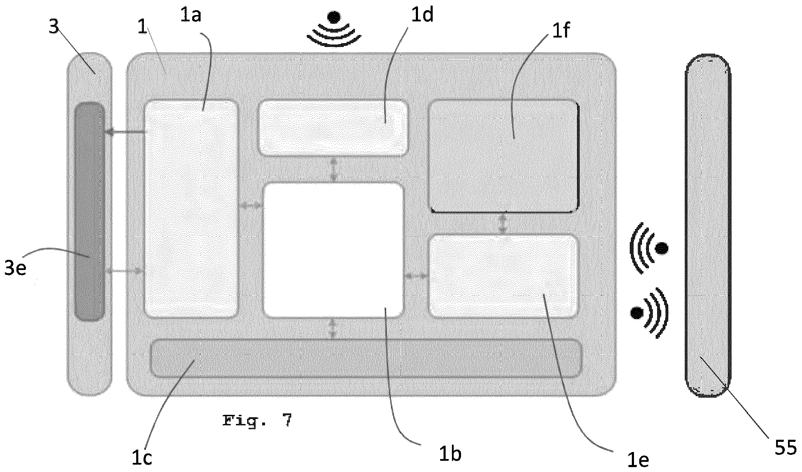

### 3. Drone (figure 7)

The Drone is equipped with GPS positioning and RTK used to correct common error in current satellite navigation (GNSS) for a precise position location. Wireless data Interface is used to concatenate the drone and the UWB anchor information. Data are then exchanged with the remote control through a dedicated radio channel link.

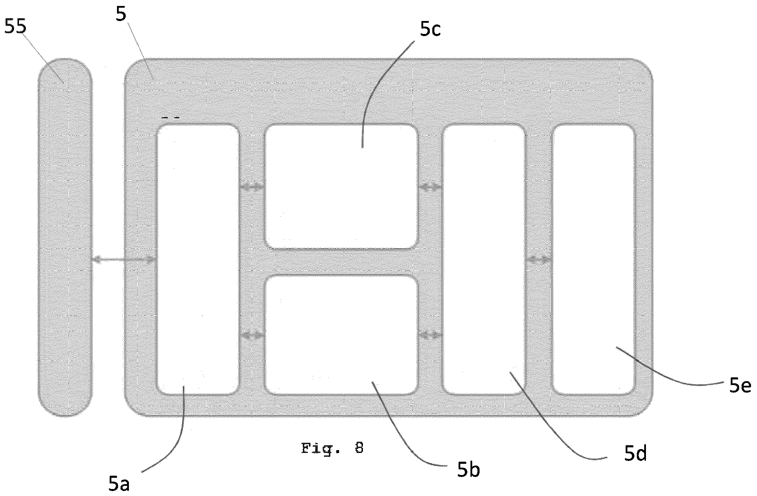

### 4. SW Application (figure 8)

The software includes four main blocks.
- The user interface is a high-level program aimed to drive the search of the tag from an operator or automatically.
- An UWB position algorithm aims to estimate the exact position of the tags on the field. The exact position is estimated by an especially developed algorithm for tri-dimensional trilateration based on the data acquired from the drone moving in the intervention zone.
- A Drone position algorithm, given starting coordinate(s), adaptively scan the intervention/analysis area.
- Collected data are downloaded/uploaded to an external database.

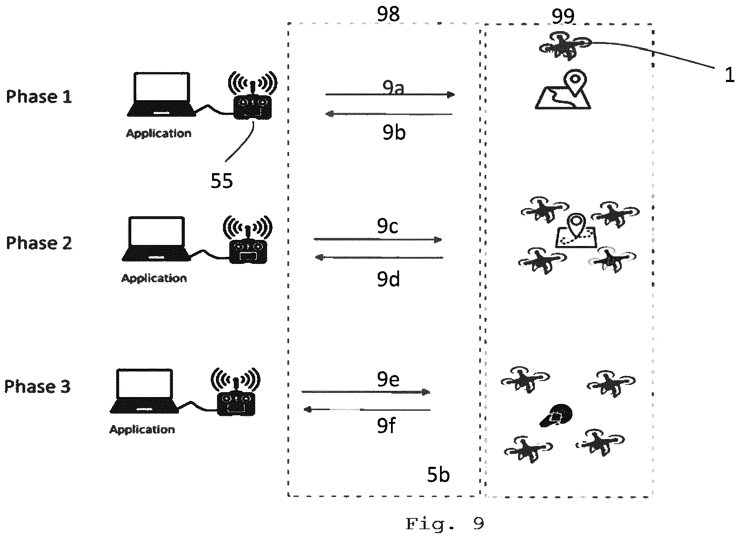

With reference to figure 9, it is schematically explained how the drone may be configured to scan a space where an intervention is required.

The drone, given an intervention coordinate, position automatically or semi-manually in the area of intervention (Phase 1). Given the intervention area, a first scan is automatically performed in order to identify TAGs, relative distances and a first raw position estimation (phase 2). Based on a trajectory algorithm, the drone performs a best repeated path in order to efficiently, adaptively and precisely track the TAGs position. With reference numbers 9a to 9f, steps of the method are schematically represented. At step 9a, a software on board the remote control 55 of the drone generates intervention coordinates, and sends them to the drone. The drone moves to the intervention coordinates and, at step 9b, the drone sends back to the remote control 55 of the drone position (GPS/RTK). Telemetry and/or video is optionally transmitted.

Rectangle 98 identifies the radio link and rectangle 99 indicates GPS/RTK - UWB.

At step 9c, the software on board the remote control 55 of the drone generates first round search tag coordinates, and sends them to the drone. The drone moves to interventions zone looking for tags. UWB, scan is performed to measure tags distances. At step 9d, the drone sends back to the remote control 55 of the drone relative tags distances (UWB) and drone positions (GPS/RTK). Telemetry and/or video is optionally transmitted.

At step 9e, the software on board the remote control 55 of the drone generates "circular" track coordinates (wherein "circular" has not to be read in a limitative way), and sends them to the drone. The drone moves to interventions zone looking for tags. UWB scan is performed measuring relative tag distance. At step 9f, the drone sends back to the remote control 55 of the drone relative tags distances (UWB) and drone positions (GPS/RTK). Telemetry and/or video is optionally transmitted.

The remote control 55, at last, processes triangulation and absolute tags positions.

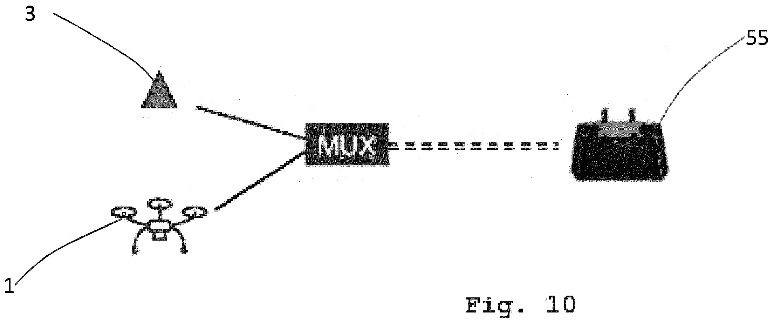

### 5. Remote Controller (fig. 10)

Remote controller is configured to use the radiolink channel to pilot the drone and exchange data with the anchor. Data is composed by drone positioning coordinates, UWB data, telemetry and video stream. Radiocontroller is also connected and interfaced to the software application.

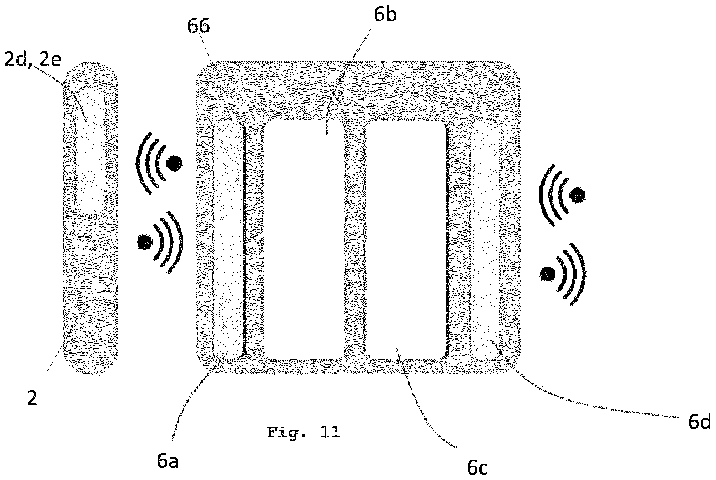

### 6. Mobile app (figure 11)

A Mobile phone gives the possibility to be interfaced with the tag modules using a Bluetooth communication. Tag alarms can be transmitted from the tag module and distributed with the cellular network to the SW application database for rapid emergency intervention

Therefore, according to the method and system as disclosed, detection and the localization of objects in space by means of a single moving UWB anchor (drone) is made. Tracking seeks to determine the position of tags associated to items or persons with the scope of identifying their position over time.

In an embodiment, a localization algorithm takes into consideration that the tags worn by people could move during the acquisition phase by the anchor mounted on the moving drone. An evaluation of the displacements of the Tag using a low-cost Inertial Measurement Unit (IMU) consisting of a 3-axis gyroscope and a 3-axis accelerometer is envisaged.

The method and system cover a large number of application where the following functionalities are required:
- real time tracking of moving objects
- large areas objects position localization
- high accuracy on moving object detection
- sensor data acquisition and positioning
- remote access control

In the drawings, schematic block diagrams of the drone, the tag, the anchor, a ground station application and a mobile application are given, according to an embodiment. In particular, following reference signs denote corresponding features.

### 1. Drone

1a Drone data and power interface
1b Drone on-board computer
1c Drone power management
1d GNSS/RTK
1e Drone wireless interface (radio link)
1f Drone proprietary control and management

### 2. TAG

2a UWB integrated antenna and matching
2b UWB transceiver
2c Microcontroller
2d Bluetooth transceiver
2e Bluetooth integrated antenna and matching
2f User interface
2g LiPo Battery
2h Power and charging management
2i Data interface

### 3 Anchor

3a UWB integrated dual polarized antenna and matching
3b UWB integrated dual polarized antenna and matching
3c UWB transceiver
3d Microcontroller
3e Drone data and power interface
3f User interface
3g LiPo Battery
3h Power and charging management

### 5. Ground station application

### 55. Drone remote control

5a Data parsing
5b UWB tracking algorithm
5c Drone position algorithm
5d Mission control
5e User/database interface

### 6 Mobile phone

66 Mobile application
6a BT interface
6b TAG advanced settings and UI
6c Alarms management
6d Cellular networks interface

Advantageously, the present invention provides an innovative tracking and data transmission system based on UWB technology and the use of a drone as a mobile anchor. The mobile anchor has its own position tracking system (GPS/RTK) which is a reference for acquisition of position of the assets (tags) to be monitored. Each asset is equipped with a tag to allow the sending of data, alarms and tracking of the exact position. The drone may be equipped with a specifically developed electronics to implement a bridge between the tags and a ground station. Bringing includes processing of data to and from the software developed for the ground station. The method is suitable to manage positions detection of tags in dynamic situations where a fast deployment of the data capture and tracking is required, for instance, in large remote areas where it is difficult to reach and track the position of sensors, monitoring devices, vehicles or people.

## Claims

1. Method for determining position of at least one object in a space,
- associating a tag to the object, so as the position of the tag corresponds to the position of the object;
- associating an anchor to a drone, so as the position of the anchor corresponds to the position of the drone;
- measuring an initial distance of the tag from the anchor, when the drone is at an initial position in the space, wherein the initial distance is measured sending UWB (Ultra-Wide Band) signals between the anchor and the tag;
- measuring at least two additional distances of the tag from the anchor, when the drone is moved into at least two additional positions in the space, wherein the at least two additional distances are measured by sending UWB (Ultra-Wide Band) signals between the anchor and the tag;
- detecting positions of the anchor in the space at said initial position and said at least two additional positions by means of a positioning system on board the drone when the initial distance and the two additional distances are measured; and
- determining the position of the tag in the space by processing trilateration based on the initial distance, the at least two additional distances, the positions of the drone, respectively, at the initial position and the at least two additional positions.

2. Method for determining position according to claim 1 wherein the object is stationary in the space.

3. Method according to claim 1 wherein the initial position in the space is automatically reached by the drone following a predetermined flight path in the space by means of which the space is scanned until presence of the tag(s) is detected.

4. Method according to claim 1 wherein said initial distance is measured sequentially for each of a plurality of tags associated to respective objects, determined to be present in the space, wherein the predetermined path is ended after the initial distance is measured for all the tags of said plurality of the tags.

5. Method according to claim 4 wherein
- said at least two additional distances include a first distance and a second distance, wherein
- the first distance(s) are measured sequentially for each of the plurality of tags determined to be present in the space, wherein
a path of the drone for measuring the first distance(s) is ended after the first distance(s) are measured for all tags of said plurality of the tags, and wherein
- the second distance is measured sequentially for each of the plurality of tags determined to be present in the space, after the path of the drone for measuring the first distance(s) is ended.

6. Method according to claim 1 wherein the flight path is started from a geographical coordinate which is received from the drone as a command to determine position of object(s), said command including a maximum distance from the geographical coordinate within which carrying out said position determination.

7. Method according to claim 1 further including wireless communications between a remote controller and the drone.

8. Method according to claim 7 wherein the remote controller receives
- the positions of the drone at the initial position and at the at least two additional positions from the drone and
- receive the initial distance and the at least two additional distances from the anchor, and wherein
said step of determining the position is made in the remote controller.

9. Method according to claim 1 wherein
- the initial distance and the at least two additional distances from the anchor are determined in the anchor,
- the anchor includes a communication interface to the drone and the initial distance and the at least two additional distances are transmitted to the drone; and wherein
said step of determining the position is made in the drone.

10. System for determining position of at least one object in a space, including
- a tag associated to the object;
- an anchor associated to a drone;
- the drone including a positioning system and being configured to:
*move at an initial position in the space, for measuring an initial distance of the tag from the anchor;
*move into at least two additional positions in the space, for measuring at least two additional distances of the tag from the anchor;
- wherein each of the tag and the anchor include an UWB (Ultra-Wide Band) transceiver to measure the initial distance and the at least two additional distances by sending UWB signals.
- a processor configured for determining the position of the tag in the space by processing trilateration based on the initial distance and the at least two additional distances, wherein said processor is further configured to process positions of the anchor in the space at said initial position and said at least two additional positions for processing trilateration.

11. System for determining position according to claim 10, wherein the processor for determining the position of the tag in the space is included in a base station.

12. System for determining position according to claim 10, wherein the processor is included in the drone.

13. System for determining position according to claim 10, wherein the anchor includes at least two UWB dual polarized antennas, suitable to receive signals from the tag(s) also in case of misalignment therefrom.

14. System for determining position according to claim 13, wherein each one of said UWB dual polarized antenna includes an array of at least two antennas adapted to detect phase variations of the signal from the tag(s) and to detect, y means of said phase variations, the distance of the tag from the anchor and an angle of the tag from the anchor.

15. System for determining position according to claim 10, wherein the tag and/or the anchor includes interfaces towards a mobile phone.

## Amended claims

### Amended claims in accordance with Rule 137(2) EPC.

1. Method for determining position of at least one object in a space,
- associating a tag to the object, so as the position of the tag corresponds to the position of the object;
- associating an anchor to a drone, so as the position of the anchor corresponds to the position of the drone;
- measuring an initial distance of the tag from the anchor, when the drone is at an initial position in the space, wherein the initial distance is measured sending UWB (Ultra-Wide Band) signals between the anchor and the tag;
- measuring at least two additional distances of the tag from the anchor, when the drone is moved into at least two additional positions in the space, wherein the at least two additional distances are measured by sending UWB (Ultra-Wide Band) signals between the anchor and the tag;
- detecting positions of the anchor in the space at said initial position and said at least two additional positions by means of a positioning system on board the drone when the initial distance and the two additional distances are measured; and
- determining the position of the tag in the space by processing trilateration based on the initial distance, the at least two additional distances, the positions of the drone, respectively, at the initial position and the at least two additional positions, **characterized in that**
- the initial distance and the at least two additional distances from the anchor are determined in the anchor,
- the anchor includes a communication interface to the drone and the initial distance and the at least two additional distances are transmitted to the drone; and
said step of determining the position of the tag in the space is made in the drone, wherein
before said step of determining the position of the tag, the drone scans the space starting from a geographical coordinate to detect presence of a plurality of tags, wherein the drone measure distances among the tags of said plurality of tags and establishes a predetermined flight path as a sequence of tags where to move, wherein distances of a tag in the sequence from a previous and a following tag in sequence are different,
wherein said step of determining the position of the tag includes measuring said initial distance and said at least two additional distances from the anchor for a first tag in the sequence and then moving to the next tag in the sequence until all the positions of the tags in the sequence are determined.

2. Method for determining position according to claim 1 wherein the object is stationary in the space.

3. Method according to claim 1 wherein the initial position in the space is automatically reached by the drone following the flight path in the space by means of which the space is scanned until presence of the tag(s) is detected.

4. Method according to claim 1 wherein the flight path is started from the geographical coordinate which is received from the drone as a command to determine position of object(s), said command including a maximum distance from the geographical coordinate within which carrying out said position determination.

5. Method according to claim 1 further including wireless communications between a remote controller and the drone.

6. Method according to claim 1 **characterized in that** the drone at a position measures distances from more than one tag in the sequence.

7. System for determining position of at least one object in a space, including
- a tag associated to the object;
- an anchor associated to a drone;
- the drone including a positioning system and being configured to:
*move at an initial position in the space, for measuring an initial distance of the tag from the anchor;
*move into at least two additional positions in the space, for measuring at least two additional distances of the tag from the anchor;
- wherein each of the tag and the anchor include an UWB (Ultra-Wide Band) transceiver to measure the initial distance and the at least two additional distances by sending UWB signals.
- a processor configured for determining the position of the tag in the space by processing trilateration based on the initial distance and the at least two additional distances, wherein said processor is further configured to process positions of the anchor in the space at said initial position and said at least two additional positions for processing trilateration, **characterized in that** -the anchor is configured to determine the initial distance and the at least two additional distances,
- the anchor includes a communication interface to the drone and is configured to transmit the initial distance and the at least two additional distances to the drone;
the drone is configured to:
- determine the position of the tag in the space;
- before said step of determining the position, scan the space starting from a geographical coordinate to detect presence of a plurality of tags, to measure distances among the tags of said plurality of tags and to establish a predetermined flight path as a sequence of tags where to move, wherein distances of a tag in the sequence from a previous and a following tag in sequence are different;
- measure said initial distance and said at least two additional distances from the anchor for a first tag in the sequence and then moving to the next tag in the sequence until all the positions of the tags in the sequence are determined.

8. System for determining position according to claim 7, wherein the anchor includes at least two UWB dual polarized antennas, suitable to receive signals from the tag(s) also in case of misalignment therefrom.

9. System for determining position according to claim 8, wherein each one of said UWB dual polarized antenna includes an array of at least two antennas adapted to detect phase variations of the signal from the tag(s) and to detect, y means of said phase variations, the distance of the tag from the anchor and an angle of the tag from the anchor.

10. System for determining position according to claim 9, wherein the tag and/or the anchor includes interfaces towards a mobile phone.
